# EUROPÄISCHE PATENTSCHRIFT

(11) **EP 2 126 302 B1**
(45) Veröffentlichungstag und Bekanntmachung des Hinweises auf die Patenterteilung: **28.07.2010**
(21) Anmeldenummer: 07822660.2
(22) Anmeldetag: 16.11.2007
(51) Int. Cl.: F01N 3/20

(54) **SCR-INJEKTIONSEINRICHTUNG**
SCR-INJECTION UNIT
DISPOSITIF D'INJECTION POUR RÉDUCTION CATALYTIQUE SÉLECTIVE (SCR)

(30) Priorität: 28.12.2006 DE 102006061730
(43) Veröffentlichungstag der Anmeldung: 02.12.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE); SCHMELING, Ulf-Peter, 71726 Benningen (DE)
(86) Internationale Anmeldenummer: PCT/EP2007/062440
(87) Internationale Veröffentlichungsnummer: WO 2008/080695

(56) Entgegenhaltungen:
- EP-A- 1 662 108
- DE-C1- 19 856 366
- JP-A- 9 096 212

## Beschreibung

### Stand der Technik

Die Erfindung betrifft eine SCR-Injektionseinrichtung nach dem Oberbegriff des Anspruchs 1.

Es ist beispielsweise aus der DE 103 24 482 A1 bekannt, das der Stickoxidgehalt im Abgas einer Brennkraftmaschine durch eine selektive katalytische Reduktion (SCR) verringert werden kann. Dazu wird dem Abgas eine unmittelbar reduzierend wirkende Substanz wie Ammoniak oder ein Vorprodukt zugeführt, welches erst im Abgas reduzierende Substanzen freisetzt. Als Vorprodukt kann beispielsweise eine Harnstoff-Wasser-Lösung verwendet werden. Ammoniak wird bei der selektiven katalytischen Reduktion mit Stickstoffmonoxid und Stickstoffdioxid zu molekularem Stickstoff und Wasser umgewandelt. Die selektive katalytische Reduktion findet in einem SCR-Katalysator statt.

Die Einbringung beispielsweise der Harnstoff-Wasser-Lösung in das Abgas erfolgt über eine SCR-Injektionseinrichtung. Diese umfasst wiederum einen Injektor und eine Befestigungseinrichtung, mit deren Hilfe der Injektor an einem Flansch eines Abgasrohrs befestigt ist. Der Injektor spritzt die Harnstoff-Wasser-Lösung auf diese Weise direkt in das Abgasrohr, stromaufwärts vom SCR-Katalysator, ein.

### Offenbarung der Erfindung

Um das Reduktionsmittel optimal in das Abgas einbringen zu können, muss der Injektor möglichst nahe am heißen Abgasrohr positioniert sein. Aus Gründen der Bauteilfestigkeit und der Alterung des Reduktionsmittels und der damit verbundenen Korrosionsneigung darf die Temperatur des Injektors im Betrieb jedoch ein bestimmtes Niveau nicht überschreiten. Aufgabe der vorliegenden Erfindung ist es, eine SCR-Injektionseinrichtung bereitzustellen, bei der im Betrieb der Injektor eine niedrige Temperatur aufweist, und die gleichzeitig einfach und preiswert hergestellt werden kann und robust baut.

Diese Aufgabe wird mit einer SCR-Injektionseinrichtung mit den Merkmalen des Anspruchs 1 gelöst. Vorteilhafte Weiterbildungen der Erfindung sind in Unteransprüchen genannt. Für die Erfindung wichtige Merkmale sind ferner in der nachfolgenden Beschreibung aufgeführt und in der beiliegenden Zeichnung gezeigt. Dabei gilt, dass diese Merkmale auch in ganz unterschiedlichen Kombinationen für die Erfindung wichtig sein können, ohne dass hierauf jeweils explizit hingewiesen wird.

Erfindungsgemäß wurde erkannt, dass der Injektor im Betrieb nicht nur durch den unmittelbaren Kontakt seiner Spitze mit dem heißen Abgas erwärmt wird, sondern auch durch Wärmeleitung über die am Abgasrohr befestigte Haltestruktur. Dem begegnet die erfindungsgemäße SCR-Injektionseinrichtung dadurch, dass die Wärmeleitung vom Abgasrohr zum Injektor deutlich reduziert oder sogar gänzlich unterbunden wird. Hierzu dienen zwei Maßnahmen: Zum einen wird die Wärmeleitung über das Hülsenelement hinweg reduziert, in dem dieses einen länglichen dünnwandigen Verbindungsabschnitt aufweist, der eine Art "Wärmestromdrossel" bildet und durch den die Wärme hindurchströmen muss. Als zweite Maßnahme ist die Haltestruktur für den Injektor lediglich mit dem vom Abgasrohr abgewandten axialen Ende des Hülsenelements kraftschlüssig verbunden. Damit wird der durch das Hülsenelement gelangende Wärmestrom von der Haltestruktur für den Injektor ferngehalten.

Im Ergebnis bedeutet dies, dass das Reduktionsmittel im Injektor weniger gealtert wird und der Injektor eine erhöhte Robustheit gegenüber der Temperaturbelastung aufweist. Da das Reduktionsmittel im Injektor, je nach Systemdruck, bei einer Temperatur größer als 140 bis 160 Grad Celsius in die Dampfphase übergeht, kann mit der verbesserten Wärmeabfuhr Sieden im Injektor und eine damit verbundene Fehldosierung vermieden werden. Dies alles wird durch einfache konstruktive Maßnahmen erreicht, was den Fertigungsaufwand reduziert.

Dies gilt insbesondere dann, wenn das Hülsenelement aus Metall, insbesondere als Umformteil hergestellt ist. Darüber hinaus weist ein solches Hülsenelement eine bessere Lebensdauer auf, da ein Metallteil gegenüber einem Keramikteil nur eine geringere Rissneigung hat.

Der Wärmefluss über das Hülsenelement hinweg zum Kühlkörper wird nochmals reduziert, wenn zwischen Kühlkörper und Verbindungsabschnitt eine thermische Isolation angeordnet ist.

Das Längen/Dickenverhältnis des Verbindungsabschnitts ist vorzugsweise größer als 3, da hierdurch bereits eine gute "Wärmedrossel" geschaffen wird. Bei einem Verhältnis größer als 10 ist die Drosselwirkung nochmals deutlich verbessert, bei einem Verhältnis größer als 20 kann bereits von einer "Wärmestromsperre" gesprochen werden.

Auf Grund der Drosselung des Wärmestroms über das Hülsenelement hinweg kann der Kühlkörper ein passiver Kühlkörper sein, die Verwendung eines Kühlfluids, beispielsweise wässriger Harnstofflösung, und die damit verbundene Einbringung von Kühlmittelkanälen in die Haltestruktur ist nicht erforderlich.

Eine vorteilhafte konstruktive Ausgestaltung der SCR-Injektionseinrichtung sieht vor, dass das Hülsenelement in seinem dem Flansch des Abgasrohrs zugewandten Bereich einen sich radial einwärts zur Spitze des Injektors hin erstreckenden Schirmabschnitt umfasst, wobei zwischen dessen freiem Rand und dem Injektor ein geringer Spalt vorhanden ist. Auf diese Weise erfüllt das Hülsenelement eine Doppelfunktion: Es dient zum einen zur Halterung des Injektors, zum anderen aber auch zum Schutz des Injektors vor einem intensiven thermischen Kontakt mit dem im Abgasrohr strömenden Abgas, und damit vor einer unerwünschten Erwärmung des Injektors. Eine Wärmeleitung vom Injektor in den Schirmabschnitt und somit in das Hülsenelement hinein wird durch den Spalt vermieden.

An den Schirmabschnitt kann ein sich axial erstreckender Kragen angeformt sein, der in einen Gegenflansch des Abgasrohres mündet. Auf diese Weise wird ein rohrartiger Fuß geschaffen, über den das Hülsenelement auf einfache und sichere Art und Weise am Flansch des Abgasrohres befestigt werden kann.

An den Schirmabschnitt kann wiederum im Bereich des Kragens der Verbindungsabschnitt angeformt sein. Ein solches Teil ist einfach herstellbar. Darüber hinaus kann bereits der Kragen als Wärmedrossel wirken, wodurch bereits eine verringerte Wärmemenge in den Verbindungsabschnitt eingeleitet wird.

Eine konkrete konstruktive Ausgestaltung des Hülsenelements sieht vor, dass dieses einen sich vom Schirmabschnitt nach radial auswärts erstreckenden ersten Bereich, einen sich an diesen anschließenden und axial vom Abgasrohr weg erstreckenden zweiten Bereich, und einen sich an diesen anschließenden radial erstreckenden dritten Bereich umfasst. Auf diese Weise erhält das Hülsenelement einen C-förmigen oder, alternativ, Z-förmigen Querschnitt, der einerseits eine gute Festigkeit aufweist und andererseits die für die Ausbildung einer Wärmedrossel notwendige Länge des Verbindungsabschnitts bereitstellen kann, ohne dass das Hülsenelement besonders große Abmessungen aufweist.

Anstelle des oben genannten Kragens kann der gerade erwähnte erste Bereich des Verbindungsabschnittes zumindest abschnittsweise als Gegenflansch des Abgasrohres ausgebildet sein. Das Hülsenelement wird damit noch einfacher und preiswerter herstellbar.

Eine besonders gute thermische Kopplung wird erreicht, wenn der Kühlkörper an das Hülsenelement, insbesondere an dessen dritten Bereich, angeformt ist.

Vorgeschlagen wird auch, dass zwischen Kühlkörper und Injektor, insbesondere im Bereich von dessen Spitze, ein Wärmeleitkörper im Presssitz gehalten ist. Ein solcher Wärmeleitkörper kann beispielsweise ein Graphitelement umfassen, und durch die Halterung im Presssitz wird zum einen ein guter Wärmekontakt und damit eine gute Wärmeabfuhr vom Injektor zum Kühlkörper hin geschaffen, und zum anderen wird der Injektor auf diese Weise ganz einfach gehaltert. Der Wärmeleitkörper ist also insoweit Teil der Haltestruktur für den Injektor.

Die Haltestruktur für den Injektor kann ferner einen bereichsweise in etwa parallel und in einem Abstand zum und radial innerhalb vom Verbindungsabschnitt verlaufenden Wandabschnitt umfasst, der mit dem vom Flansch des Abgasrohres abgewandten axialen Ende des Verbindungsabschnitts kraftschlüssig verbunden ist. Auf diese Weise wird bereits eine gute thermische Entkopplung der Haltestruktur vom Hülsenelement geschaffen und damit ein Wärmeeintrag vom Hülsenelement in den Injektor verringert oder sogar ganz vermieden. Dies gilt erst recht dann, wenn die kraftschlüssige Verbindung zwischen dem Verbindungsabschnitt und der Haltestruktur eine thermische Isolation umfasst.

Zur einfachen Befestigung des Injektors an der Haltestruktur kann zwischen Haltestruktur und Injektor ein Wärmeleitkörper im Presssitz gehalten sein. Dieser kann wiederum mit dem Kühlkörper thermisch unmittelbar verbunden sein, um die Wärme von der Spitze des Injektors möglichst effektiv abführen zu können. Das Gleiche gilt für die Haltestruktur.

Zur einfachen Montage der SCR-Injektionseinrichtung am Abgasrohr trägt bei, wenn das Hülsenelement in einem zum Flansch des Abgasrohres benachbarten Bereich einen insgesamt nach außen abragenden umlaufenden Bund aufweist, an dem in Einbaulage mindestens eine V-Schelle zur Befestigung des Hülsenelements am Flansch des Abgasrohres angreift.

Zur Verringerung des Wärmeeintrags vom Flansch des Abgasrohrs in das Hülsenelement trägt ein zwischen beiden angeordnetes thermisches Isolationselement bei.

Besonders vorteilhaft ist es, wenn ein Bereich des Verbindungsabschnitts einen Wärmetauscher mit der Umgebungsluft bildet. Hierdurch wird der Wärmestrom, der über das Hülsenelement zum Injektor gelangen könnte, nochmals verringert.

### Kurze Beschreibung der Zeichnungen

Nachfolgend werden Ausführungsbeispiele der Erfindung unter Bezugnahme auf die beiliegende Zeichnung näher erläutert. In der Zeichnung zeigen:
- Figur 1: eine schematische Darstellung einer Brennkraftmaschine mit einer SCR- Injektionseinrichtung;
- Figur 2: einen teilweisen Schnitt durch eine erste Ausführungsform eines Bereichs der SCR-Injektionseinrichtung von Figur 1; und
- Figur 3: eine Darstellung ähnlich Figur 2 einer zweiten Ausführungsform.

### Ausführungsform der Erfindung

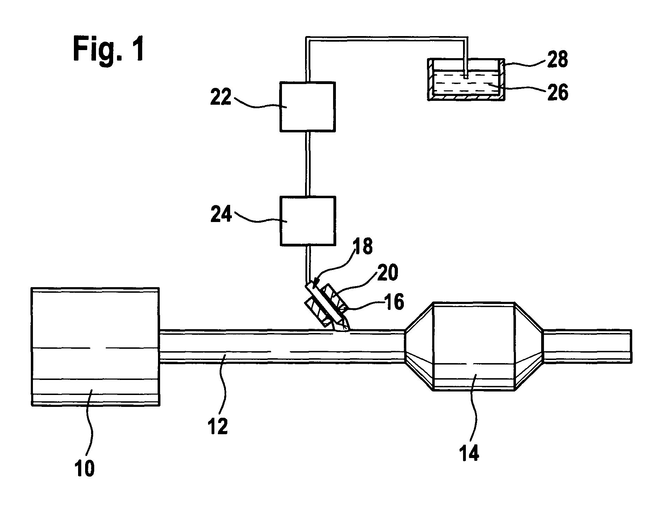

Eine Brennkraftmaschine ist in Figur 1 symbolisch dargestellt und mit dem Bezugszeichen 10 versehen. Heißes Abgas wird durch ein Abgasrohr 12 einem SCR-Katalysator 14 zugeführt. Stromaufwärts von diesem ist an das Abgasrohr 12 ein Flansch 16 angeformt, an dem eine SCR-Injektionseinrichtung 18 mit einem Hülsenelement 20 befestigt ist. Über eine Pumpe 22 und eine Ventileinrichtung 24 wird eine Harnstoff-Wasser-Lösung 26, die in einem Tank 28 bevorratet ist, der SCR-Injektionseinrichtung 18 zugeführt.

Wird im Betrieb der Brennkraftmaschine 10 die Harnstoff-Wasser-Lösung 26 von der SCR-Injektionseinrichtung 18 in das im Abgasrohr 12 strömende Abgas als feiner Spray eingespritzt, entsteht aus einer Reaktion des Harnstoffs mit dem Wasser Ammoniak, welches anschließend im SCR-Katalysator 14 durch selektive katalytische Reduktion mit Stickstoffmonoxid und Stickstoffdioxid zu molekularem Stickstoff und Wasser umgewandelt wird.

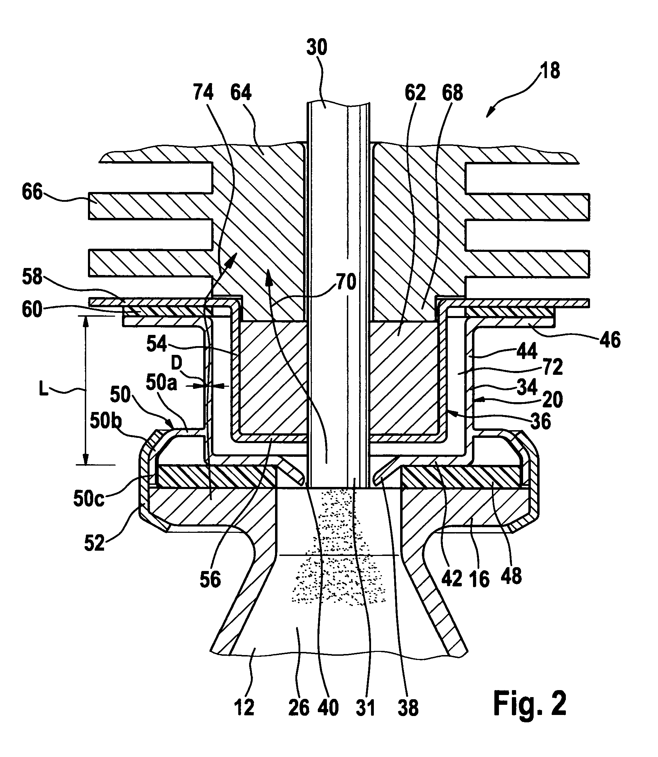

Eine erste Ausführungsform der SCR-Injektionseinrichtung 18 wird nun unter Bezugnahme auf Figur 2 näher erläutert: Zu der SCR-Injektionseinrichtung 18 gehört zunächst ein Injektor 30, dessen Spitze 31 eine Düse (nicht sichtbar) aufweist, die die Harnstoff-Wasser-Lösung 26 zu einem feinen Spray vernebelt. Der Injektor 30 ist am Flansch 16 des Abgasrohres 12, wie oben bereits erwähnt, über das Hülsenelement 20 befestigt, welches wiederum über einen dünnwandigen Verbindungsabschnitt 34 verfügt, der am einen axialen Ende mittelbar mit dem Flansch 16 des Abgasrohres 12 und am anderen axialen Ende mittelbar mit einer Haltestruktur 36 für den Injektor 30 kraftschlüssig verbunden ist. Die Art der kraftschlüssigen Verbindung ist in Figur 2 jedoch nicht im Detail dargestellt, denkbar ist ein Verpressen, Klammern, Bördeln, etc.

In seinem dem Flansch 16 des Abgasrohrs 12 zugewandten Bereich weist das Hülsenelement 20 einen sich radial einwärts zur Spitze 31 des Injektors 30 hin erstreckenden Schirmabschnitt 38 auf. Dieser Schirmabschnitt 38 wirkt im Betrieb als "thermischer Schutzschild", durch den verhindert wird, dass beispielsweise der obere Teil des Injektors 30 und die Haltestruktur 36 und andere, noch zu beschreibende Komponenten mit dem heißen Abgas in Kontakt kommen. Zwischen dem freien und abragenden Rand (ohne Bezugszeichen) des Schirmabschnitts 38 und der Spitze 31 des Injektors 30 ist ein enger Spalt 40 vorhanden, durch den ein direkter Wärmekontakt zwischen Schirmabschnitt 38 und Injektor 30 sowie ein vibrationsbedingter Verschleiß an den Kontaktstellen verhindert wird.

Der Verbindungsabschnitt 34 umfasst einen sich vom Schirmabschnitt 38 nach radial auswärts erstreckenden ersten Bereich 42, einen sich an diesen anschließenden und insgesamt axial vom Abgasrohr 12 weg erstreckenden zweiten Bereich 44, und sich an einen diesen anschließenden wiederum nach radial auswärts erstreckenden dritten Bereich 46. Die Wand des Hülsenelement 20 hat also bei der in Figur 2 dargestellten Ausführungsform eine insgesamt in etwa Z-förmige Querschnittsgeometrie. Der eigentliche Verbindungsabschnitt 34 des Hülsenelements 20 wird gemäß Figur 2 durch den zweiten Bereich 44 gebildet. Das Verhältnis der Länge L zur Dicke D des Verbindungsabschnitts 34 beträgt ungefähr 20.

Der erste, zwischen Schirmabschnitt 38 und Verbindungsabschnitt 34 angeordnete Bereich 42 des Hülsenelements 20 ist als Gegenflansch zum Flansch 16 des Abgasrohres 12 ausgebildet. Zwischen dem ersten Bereich 42 und dem Flansch 16 ist ein thermisches Isolationselement 48 angeordnet. Dieses ist zwischen einem Bund 50 und dem Schirmabschnitt 38 gehalten. Der Bund 50 ragt vom Verbindungsabschnitt 34 des Hülsenelements 20 nach radial außen und zum Flansch 16 des Abgasrohrs 12 hin ab, mit einem ersten, in Figur 2 in etwa horizontal verlaufenden Abschnitt 50a, einem sich an diesen anschließenden in einem Winkel von ungefähr 45 Grad nach schräg unten verlaufenden zweiten Abschnitt 50b und einem dritten, sich in Figur 2 in etwa senkrecht zum Flansch 16 des Abgasrohrs 12 erstreckenden Abschnitt 50c. Am Bund 50 greift in der in Figur 2 gezeigten Einbaulage eine V-Schelle 52 an, die auf diese Weise das Hülsenelement 20 am Flansch 16 des Abgasrohrs 12 befestigt. Auf Grund des thermischen Isolationselements 48 ist ein Wärmefluss vom Flansch 16 in das Hülsenelement 20 im Wesentlichen lediglich über die V-Schelle 52 und den Bund 50 möglich. Da diese nur einen geringen Querschnitt aufweisen, ist der Wärmefluss entsprechend gering.

Die Haltestruktur 36 für den Injektor 30 ist ebenfalls hülsenförmig ausgebildet mit einer Hülsenwand, die, ähnlich wie beim Hülsenelement 20, eine insgesamt Z-förmige Querschnittsgeometrie aufweist. Sie umfasst zwei in etwa parallele und in einem Abstand zum Verbindungsabschnitt 34 bzw. zum ersten Bereich 42 des Hülsenelements 20 verlaufende Wandabschnitte 54 bzw. 56. Beide Wandabschnitte 54 und 56 verlaufen darüber hinaus radial innerhalb vom Verbindungsabschnitt 34. Der Wandabschnitt 54 ist über einen parallel zum dritten Bereich 46 des Hülsenelements 20 verlaufenden Wandabschnitt 58, wie bereits oben erwähnt worden ist, mit dem dritten Bereich 46 des Hülsenelements 20 kraftschlüssig verbunden. Thermisch ist die Haltestruktur 36 aber vom Hülsenelement 20 durch ein thermisches Isolationselement 60 entkoppelt.

Zwischen dem axial verlaufenden Wandabschnitt 54 der Haltestruktur 36 und dem Injektor 30 ist ein ringförmiger Wärmeleitkörper 62 im Presssitz gehalten. Auf diese Weise wird auch der Injektor 30 zumindest mittelbar an der Haltestruktur 36 gehalten. Die SCR-Injektionseinrichtung 18 verfügt ferner über einen passiven Kühlkörper 64, der ebenfalls eine insgesamt ringförmige Gestalt aufweist und radial außen mit Kühlrippen 66 versehen ist. Der Kühlkörper 64 hat einen etwas größeren Durchmesser als der axiale Wandabschnitt 54 der Haltestruktur 36. Die der Haltestruktur 36 zugewandte Stirnfläche des Kühlkörpers 64 weist daher einen Fortsatz 68 mit geringerem Durchmesser auf, der etwas in die Haltestruktur 36 eingreift und dort direkt und flächig an der in Figur 2 oberen Stirnfläche des Wärmeleitkörpers 62 anliegt. Auf diese Weise sind der Wärmeleitkörper 62 und der Kühlkörper 64 thermisch unmittelbar miteinander verbunden. Durchmesser und axiale Länge des Fortsatzes sind so bemessen, dass der Kühlkörper 64 aber auch mit der Haltestruktur 36, dort insbesondere mit dem oberen Endbereich des axialen Wandabschnitts 54 und dem radial inneren Bereich des Wandabschnitts 58 unmittelbar thermisch verbunden ist.

Man erkennt aus Figur 2, dass der Wärmeleitkörper 62 sehr nahe zur Spitze 31 des Injektors 30 angeordnet ist. Auf diese Weise entzieht der Wärmeleitkörper 62 dem Injektor 30 den in dessen Spitze 31 eingedrungenen Wärmestrom und führt diesen an den Kühlkörper 64 ab. Der entsprechende Wärmestrom ist in Figur 2 durch einen Pfeil 70 angedeutet. Man erkennt ferner aus Figur 2, dass zwischen der Haltestruktur 36 und dem Hülsenelement 20 in weiten Bereichen ein thermisch isolierender Luftspalt 72 existiert, der einen Wärmeaustausch zwischen Haltestruktur 36 und Hülsenelement 20 reduziert oder sogar gänzlich unterbindet. Die Wärmeleitung über das Hülsenelement 20 ist darüber hinaus minimal: Dies zum einen wegen der thermischen Isolierung mittels des thermischen Isolationselements 48, aber zum anderen auch durch die als "thermische Drossel" wirkende Ausgestaltung des Verbindungsabschnitts 34 als längliches und dünnwandiges Teil, welches dazu hin einen Wärmetauscher mit der Umgebungsluft bildet. Ein Wärmeaustausch zwischen Hülsenelement 20 und Kühlkörper 64 bzw. Haltestruktur 36 wird darüber hinaus durch die thermische Isolation 60 unterbunden. Auf Grund all dieser Maßnahmen ist der durch einen Pfeil 74 in Figur 2 angedeutete Wärmestrom vom Flansch 16 über das Hülsenelement 20 in die Haltestruktur 36 und den Kühlkörper 60 denkbar gering.

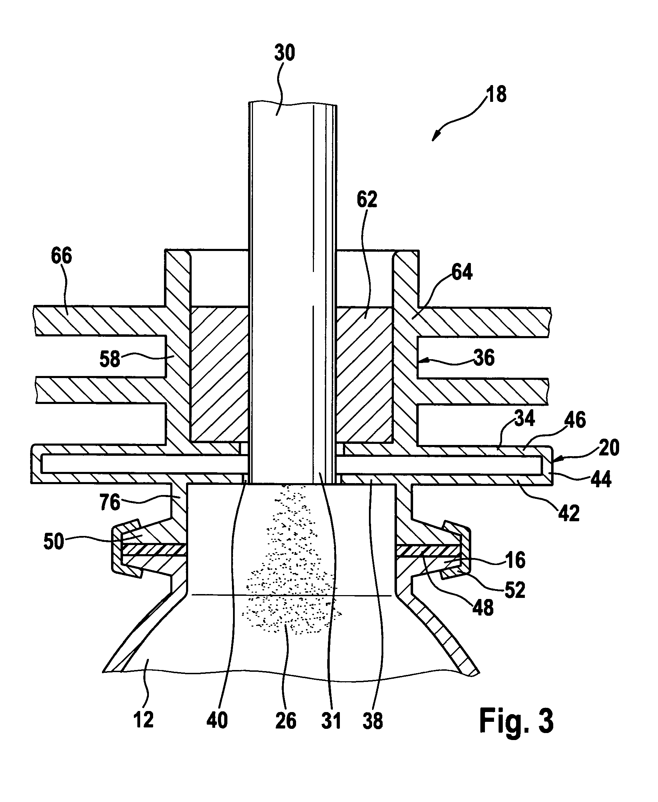

Nachfolgend wird unter Bezugnahme auf Figur 3 eine alternative Ausführungsform der SCR-Injektionseinrichtung 18 beschrieben. Dabei gilt, dass solche Elemente und Bereiche, die äquivalente Funktionen zu bereits beschriebenen Elementen und Bereichen aufweisen, die gleichen Bezugszeichen tragen und nicht nochmals erläutert sind.

Ein erster Unterschied betrifft die Verbindung des Hülsenelements 20 mit dem Flansch 16 des Abgasrohrs 12: Anders als der in Figur 2 gezeigten Ausführungsform ist der in Figur 3 gezeigten SCR-Injektionseinrichtung 18 an den Schirmabschnitt 38 ein sich axial zum Flansch 16 hin erstreckender Kragen 76 angeformt, der in einen sich wiederum radial nach außen erstreckenden Gegenflansch 50 zum Flansch 16 des Abgasrohres 12 mündet. Dieser bildet insoweit wieder einen Bund 50, an dem die V-Schelle 52 angreifen und so das Hülsenelement 20 mit dem Flansch 16 des Abgasrohres 12 fest verbinden kann.

Die Querschnittsgeometrie des Hülsenelements 20 ist bei der in Figur 3 dargestellten Ausführungsform nicht Z-, sondern C-förmig, da sich der dritte Bereich 46 nach radial einwärts erstreckt. Darüber hinaus sind Haltestruktur 36 und Kühlkörper 64 nicht als jeweils separate Teile ausgebildet, sondern einstückig mit dem Hülsenelement 20 verbunden. Die Haltestruktur 36 wird sogar durch den Kühlkörper 64 gebildet: Dieser weist nämlich einfach einen sich vom dritten Bereich 46 des Hülsenelements 20 axial in Figur 3 nach oben erstreckenden Ring 58 auf, an den radial außen Kühlrippen 66 angeformt sind. Zwischen Kühlkörper 64 bzw. Ring 58 der Haltestruktur 36 und dem Injektor 30 ist der Wärmeleitkörper 62 im Presssitz gehalten.

Der Verbindungsabschnitt 34 wird bei der in Figur 3 gezeigten Ausführungsform durch alle drei Bereiche 42,44 und 46 gebildet. Da der zweite Bereich 44 nur eine geringe Länge hat, baut das Hülsenelement 20 in axialer Richtung sehr kurz, was wiederum ermöglicht, den Wärmeleitkörper 62 sehr nahe zur Spitze 31 des Injektors 30 zu platzieren.

## Patentansprüche

1. SCR-Injektionseinrichtung (18), mit einem Injektor (30) und einem Hülsenelement (20) zum Befestigen des Injektors (30) an einem Flansch (16) eines Abgasrohrs (12), und einem Kühlkörper (64), **dadurch gekennzeichnet, dass** das Hülsenelement (20) einen länglichen dünnwandigen Verbindungsabschnitt (34) aufweist, der am einen axialen Ende mit dem Flansch (16) des Abgasrohres (12) und am anderen axialen Ende mit einer Haltestruktur (36) für den Injektor (30) mindestens mittelbar kraftschlüssig verbunden ist, wobei der Kühlkörper (64) auf der dem Flansch (16) abgewandten Seite des Hülsenelements (20) angeordnet ist.

2. SCR-Injektionseinrichtung (18) nach Anspruch 1, **dadurch gekennzeichnet, dass** zwischen Kühlkörper (64) und Verbindungsabschnitt (34) eine thermische Isolation (60) angeordnet ist.

3. SCR-Injektionseinrichtung (18) nach einem der Ansprüche 1 oder 2, **dadurch gekennzeichnet, dass** das Hülsenelement (20) aus Metall, insbesondere als Umformteil, hergestellt ist.

4. SCR-Injektionseinrichtung (18) nach einem der vorhergehenden Ansprüche, **dadurch gekennzeichnet, dass** das Längen/Dickenverhältnis des Verbindungsabschnitts (34) größer als 3, vorzugsweise größer als 10, besonders vorzugsweise größer als 20 ist.

5. SCR-Injektionseinrichtung (18) nach einem der vorhergehenden Ansprüche, **dadurch gekennzeichnet, dass** der Kühlkörper (64) ein passiver Kühlkörper ist.

6. SCR-Injektionseinrichtung (18) nach einem der vorhergehenden Ansprüche, **dadurch gekennzeichnet, dass** das Hülsenelement (20) in seinem dem Flansch (16) des Abgasrohrs (12) zugewandten Bereich einen sich radial einwärts zur Spitze (31) des Injektors (30) hin erstreckenden Schirmabschnitt (38) umfasst, wobei zwischen dessen freiem Rand und dem Injektor (30) ein geringer Spalt (40) vorhanden ist.

7. SCR-Injektionseinrichtung (18) nach Anspruch 6, **dadurch gekennzeichnet, dass** an den Schirmabschnitt (38) ein sich axial erstreckender Kragen (76) angeformt ist, der in einen Gegenflansch (50) zum Flansch (16) des Abgasrohres (12) mündet.

8. SCR-Injektionseinrichtung (18) nach Anspruch 7, dass der Verbindungsabschnitt (34) im Bereich des Kragens (76) an den Schirmabschnitt (38) angeformt ist.

9. SCR-Injektionseinrichtung (18) nach einem der Ansprüche 6 bis 8, **dadurch gekennzeichnet, dass** das Hülsenelement (20) einen sich vom Schirmabschnitt (38) nach radial auswärts erstreckenden ersten Bereich (42), einen sich an diesen anschließenden und axial vom Abgasrohr (12) weg erstreckenden zweiten Bereich (44), und einen sich an diesen anschließenden radial erstreckenden dritten Bereich (46) umfasst.

10. SCR-Injektionseinrichtung (18) nach Anspruch 9, **dadurch gekennzeichnet, dass** der erste Bereich (42) zumindest abschnittsweise als Gegenflansch zum Flansch (16) des Abgasrohres (12) ausgebildet ist.

11. SCR-Injektionseinrichtung (18) nach einem der Ansprüche 3 bis 10, **dadurch gekennzeichnet, dass** der Kühlkörper (64) an das Hülsenelement (20), insbesondere an dessen dritten Bereich (46), angeformt ist.

12. SCR-Injektionseinrichtung (18) nach einem der vorhergehenden Ansprüche,
**dadurch gekennzeichnet, dass** zwischen Kühlkörper (64) und Injektor (30), insbesondere im Bereich von dessen Spitze (31), ein Wärmeleitkörper (62) im Presssitz gehalten ist.

13. SCR-Injektionseinrichtung (18) nach einem der vorhergehenden Ansprüche,
**dadurch gekennzeichnet, dass** die Haltestruktur (36) für den Injektor (30) einen bereichsweise in etwa parallel und in einem Abstand zum und radial innerhalb vom Verbindungsabschnitt (34) verlaufenden Wandabschnitt (54) umfasst, der mit dem vom Flansch (16) des Abgasrohres (12) abgewandten axialen Ende des Hülsenelements (20) mindestens mittelbar kraftschlüssig verbunden ist.

14. SCR-Injektionseinrichtung (18) nach einem der vorhergehenden Ansprüche,
**dadurch gekennzeichnet, dass** die kraftschlüssige Verbindung zwischen dem Verbindungsabschnitt (34) und der Haltestruktur (36) eine thermische Isolation (60) umfasst.

15. SCR-Injektionseinrichtung (18) nach einem der vorhergehenden Ansprüche,
**dadurch gekennzeichnet, dass** zwischen der Haltestruktur (36) und dem Injektor (30) ein Wärmeleitkörper (62) im Presssitz gehalten ist.

16. SCR-Injektionseinrichtung (18) nach Anspruch 15, **dadurch gekennzeichnet, dass** der Wärmeleitkörper (62) mit dem Kühlkörper (64) thermisch unmittelbar verbunden ist.

17. SCR-Injektionseinrichtung (18) nach einem der vorhergehenden Ansprüche,
**dadurch gekennzeichnet, dass** die Haltestruktur (36) mit dem Kühlkörper (64) unmittelbar thermisch verbunden ist.

18. SCR-Injektionseinrichtung (18) nach einem der vorhergehenden Ansprüche,
**dadurch gekennzeichnet, dass** das Hülsenelement (20) in einem zum Flansch (16) des Abgasrohres (12) benachbarten Bereich einen insgesamt radial nach außen abragenden umlaufenden Bund (50) aufweist, an dem in Einbaulage mindestens eine V-Schelle (52) zur Befestigung des Hülsenelements (20) am Flansch (16) des Abgasrohres (12) angreift.

19. SCR-Injektionseinrichtung (18) nach einem der vorhergehenden Ansprüche,
**dadurch gekennzeichnet, dass** zwischen Hülsenelement (20) und Flansch (16) des Abgasrohres (12) ein thermisches Isolationselement (48) angeordnet ist.

20. SCR-Injektionseinrichtung (18) nach den Ansprüchen 19 und 20, **dadurch gekennzeichnet, dass** das Isolationselement (48) zwischen einerseits dem Bund (50) oder der V-Schelle (52) und andererseits dem Schirmabschnitt (38) gehalten ist.

21. SCR-Injektionseinrichtung (18) nach einem der vorhergehenden Ansprüche, **dadurch gekennzeichnet, dass** mindestens ein Bereich des Verbindungsabschnitts (34) einen Wärmetauscher mit der Umgebungsluft bildet.

## Claims

1. SCR injection device (18), having an injector (30) and having a sleeve element (20) for fastening the injector (30) to a flange (16) of an exhaust pipe (12), and having a cooling body (64), **characterized in that** the sleeve element (20) has an elongate thin-walled connecting section (34) which is at least indirectly connected in a non-positively locking fashion at one axial end to the flange (16) of the exhaust pipe (12) and at the other axial end to a holding structure (36) for the injector (30), with the cooling body (64) being arranged on that side of the sleeve element (20) which faces away from the flange (16).

2. SCR injection device (18) according to Claim 1, **characterized in that** a thermal insulation (60) is arranged between the cooling body (64) and connecting section (34).

3. SCR injection device (18) according to one of Claims 1 or 2, **characterized in that** the sleeve element (20) is produced from metal, in particular as a formed part.

4. SCR injection device (18) according to one of the preceding claims, **characterized in that** the length/thickness ratio of the connecting section (34) is greater than 3, preferably greater than 10, particularly preferably greater than 20.

5. SCR injection device (18) according to one of the preceding claims, **characterized in that** the cooling body (64) is a passive cooling body.

6. SCR injection device (18) according to one of the preceding claims, **characterized in that** the sleeve element (20) comprises, in its region facing towards the flange (16) of the exhaust pipe (12), a shield section (38) which extends radially inwards towards the tip (31) of the injector (30), with a small gap (40) being present between the free end of said shield section (38) and the injector (30).

7. SCR injection device (18) according to Claim 6, **characterized in that** an axially extending collar (76) is integrally formed on the shield section (38), which collar (76) opens out into a counterpart flange (50) to the flange (16) of the exhaust pipe (12).

8. SCR injection device (18) according to Claim 7, **characterized in that** the connecting section (34) is integrally formed on the shield section (38) in the region of the collar (76).

9. SCR injection device (18) according to one of Claims 6 to 8, **characterized in that** the sleeve element (20) has a first region (42) which extends radially outwards from the shield section (38), a second region (44) which adjoins said first region (42) and extends axially away from the exhaust pipe (12), and a third region (46) which adjoins said second region (44) and extends radially.

10. SCR injection device (18) according to Claim 9, **characterized in that** the first region (42) is formed at least in sections as a counterpart flange to the flange (16) of the exhaust pipe (12).

11. SCR injection device (18) according to one of Claims 3 to 10, **characterized in that** the cooling body (64) is integrally formed on the sleeve element (20), in particular on the third region (46) thereof.

12. SCR injection device (18) according to one of the preceding claims, **characterized in that** a heat-conducting body (62) is held with an interference fit between the cooling body (64) and injector (30), in particular in the region of the tip (31) of the injector (30).

13. SCR injection device (18) according to one of the preceding claims, **characterized in that** the holding structure (36) for the injector (30) comprises a wall section (54) which, in regions, runs approximately parallel to and spaced apart from and radially within the connecting section (34), which wall section (54) is at least indirectly connected in a non-positively locking fashion to that axial end of the sleeve element (20) which faces away from the flange (16) of the exhaust pipe (12).

14. SCR injection device (18) according to one of the preceding claims, **characterized in that** the non-positively locking connection between the connecting section (34) and the holding structure (36) comprises a thermal insulation (60).

15. SCR injection device (18) according to one of the preceding claims, **characterized in that** a heat-conducting body (62) is held with an interference fit between the holding structure (36) and the injector (30).

16. SCR injection device (18) according to Claim 15, **characterized in that** the heat-conducting body (62) is thermally directly connected to the cooling body (64).

17. SCR injection device (18) according to one of the preceding claims, **characterized in that** the holding structure (36) is directly thermally connected to the cooling body (64).

18. SCR injection device (18) according to one of the preceding claims, **characterized in that** the sleeve element (20) has, in a region adjacent to the flange (16) of the exhaust pipe (12), an encircling collar (50) which, overall, projects radially outward and on which, in the installed position, engages at least one V-shaped clamp (52) for fastening the sleeve element (20) to the flange (16) of the exhaust pipe (12).

19. SCR injection device (18) according to one of the preceding claims, **characterized in that** a thermal insulation element (48) is arranged between the sleeve element (20) and the flange (16) of the exhaust pipe (12).

20. SCR injection device (18) according to Claims 19 and 20, **characterized in that** the insulation element (48) is held between firstly the collar (50) or V-shaped clamp (52) and secondly the shield section (38).

21. SCR injection device (18) according to one of the preceding claims, **characterized in that** at least one region of the connecting section (34) forms a heat exchanger with the ambient air.

## Revendications

1. Dispositif d'injection pour réduction catalytique sélective (SCR) (18), comprenant un injecteur (30) et un élément de douille (20) pour la fixation de l'injecteur (30) sur une bride (16) d'un tuyau d'échappement (12), et un corps de refroidissement (64), **caractérisé en ce que** l'élément de douille (20) présente une portion de connexion à paroi mince allongée (34), qui est connectée à une extrémité axiale à la bride (16) du tuyau d'échappement (12) et à l'autre extrémité axiale à une structure de retenue (36) pour l'injecteur (30) par engagement par force, au moins de manière indirecte, le corps de refroidissement (64) étant disposé sur le côté de l'élément de douille (20) opposé à la bride (16).

2. Dispositif d'injection pour SCR (18) selon la revendication 1, **caractérisé en ce que** l'on dispose entre le corps de refroidissement (64) et la portion de connexion (34) une isolation thermique (60).

3. Dispositif d'injection pour SCR (18) selon la revendication 1 ou 2, **caractérisé en ce que** l'élément de douille (20) est fabriqué en métal, en particulier sous forme de pièce façonnée.

4. Dispositif d'injection pour SCR (18) selon l'une quelconque des revendications précédentes, **caractérisé en ce que** le rapport longueur/épaisseur de la portion de connexion (34) est supérieur à 3, de préférence supérieur à 10, particulièrement préférablement supérieur à 20.

5. Dispositif d'injection pour SCR (18) selon l'une quelconque des revendications précédentes, **caractérisé en ce que** le corps de refroidissement (64) est un corps de refroidissement passif.

6. Dispositif d'injection pour SCR (18) selon l'une quelconque des revendications précédentes, **caractérisé en ce que** l'élément de douille (20) comprend, dans sa région tournée vers la bride (16) du tuyau d'échappement (12), une portion de protection (38) s'étendant radialement vers l'intérieur vers la pointe (31) de l'injecteur (30), un faible interstice (40) étant présent entre son bord libre et l'injecteur (30).

7. Dispositif d'injection pour SCR (18) selon la revendication 6, **caractérisé en ce qu'**un rebord (76) s'étendant axialement est façonné sur la portion de protection (38), lequel débouche dans une bride conjuguée (50) à la bride (16) du tuyau d'échappement (12).

8. Dispositif d'injection pour SCR (18) selon la revendication 7, **caractérisé en ce que** la portion de connexion (34) est façonnée dans la région du rebord (76) sur la portion de protection (38).

9. Dispositif d'injection pour SCR (18) selon l'une quelconque des revendications 6 à 8, **caractérisé en ce que** l'élément de douille (20) comprend une première région (42) s'étendant radialement vers l'extérieur depuis la portion de protection (38), une deuxième région (44) se raccordant à celle-ci et s'étendant axialement à l'écart du tuyau d'échappement (12), et une troisième région (46) s'étendant radialement et se raccordant à celle-ci.

10. Dispositif d'injection pour SCR (18) selon la revendication 9, **caractérisé en ce que** la première région (42) est réalisée au moins en partie sous forme de bride conjuguée à la bride (16) du tuyau d'échappement (12).

11. Dispositif d'injection pour SCR (18) selon l'une quelconque des revendications 3 à 10, **caractérisé en ce que** le corps de refroidissement (64) est façonné sur l'élément de douille (20), en particulier sur sa troisième région (46).

12. Dispositif d'injection pour SCR (18) selon l'une quelconque des revendications précédentes, **caractérisé en ce qu'**entre le corps de refroidissement (64) et l'injecteur (30), en particulier dans la région de sa pointe (31), un corps thermoconducteur (62) est maintenu par ajustement serré.

13. Dispositif d'injection pour SCR (18) selon l'une quelconque des revendications précédentes, **caractérisé en ce que** la structure de maintien (36) pour l'injecteur (30) présente une portion de paroi (54) s'étendant en partie approximativement parallèlement et à une distance de la portion de connexion (34) et radialement à l'intérieur de celle-ci, et qui est connectée à l'extrémité axiale de l'élément de douille (20) opposée à la bride (16) du tuyau d'échappement (12), au moins de manière indirecte, par engagement par force.

14. Dispositif d'injection pour SCR (18) selon l'une quelconque des revendications précédentes, **caractérisé en ce que** la connexion par engagement par force entre la portion de connexion (34) et la structure de maintien (36) comprend une isolation thermique (60).

15. Dispositif d'injection pour SCR (18) selon l'une quelconque des revendications précédentes, **caractérisé en ce qu'**entre la structure de maintien (36) et l'injecteur (30), un corps thermoconducteur (62) est maintenu par un ajustement serré.

16. Dispositif d'injection pour SCR (18) selon la revendication 15, **caractérisé en ce que** le corps thermoconducteur (62) est connecté thermiquement directement au corps de refroidissement (64).

17. Dispositif d'injection pour SCR (18) selon l'une quelconque des revendications précédentes, **caractérisé en ce que** la structure de maintien (36) est connectée thermiquement directement au corps de refroidissement (64).

18. Dispositif d'injection pour SCR (18) selon l'une quelconque des revendications précédentes, **caractérisé en ce que** l'élément de douille (20) présente, dans une région adjacente à la bride (16) du tuyau d'échappement (12), un épaulement (50) périphérique saillant dans l'ensemble radialement vers l'extérieur, sur lequel vient en prise dans la position de montage au moins un collier de serrage en V (52) pour la fixation de l'élément de douille (20) sur la bride (16) du tuyau d'échappement (12).

19. Dispositif d'injection pour SCR (18) selon l'une quelconque des revendications précédentes, **caractérisé en ce qu'**un élément d'isolation thermique (48) est disposé entre l'élément de douille (20) et la bride (16) du tuyau d'échappement (12).

20. Dispositif d'injection pour SCR (18) selon les revendications 19 et 20, **caractérisé en ce que** l'élément d'isolation (48) est maintenu entre d'une part l'épaulement (50) ou le collier de serrage en V (52) et d'autre part la portion de protection (38).

21. Dispositif d'injection pour SCR (18) selon l'une quelconque des revendications précédentes, **caractérisé en ce qu'**au moins une région de la portion de connexion (34) forme un échangeur de chaleur avec l'air environnant.
